(19) Europäisches Patentamt
European Patent Office
Office européen des brevets

(11) **EP 1 616 906 B1**

(12) **EUROPÄISCHE PATENTSCHRIFT**

(45) Veröffentlichungstag und Bekanntmachung des Hinweises auf die Patenterteilung:
**04.04.2007** Patentblatt **2007/14**

(51) Int Cl.:
***C08L 23/00*** *(2006.01)*     ***C08L 9/00*** *(2006.01)*
***C09K 3/00*** *(2006.01)*     ***C09D 5/34*** *(2006.01)*
***H02G 3/22*** *(2006.01)*

(21) Anmeldenummer: **05014672.9**

(22) Anmeldetag: **06.07.2005**

(54) **Quellfähige Materialzusammensetzung und deren Verwendung**

Swellable composition and use thereof

Composition gonflable et sa utilisation

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **06.07.2004 DE 102004032694**

(43) Veröffentlichungstag der Anmeldung:
**18.01.2006** Patentblatt **2006/03**

(73) Patentinhaber: **Fraunhofer-Gesellschaft zur Förderung der angewandten Forschung e.V. 80686 München (DE)**

(72) Erfinder:
• **Wack, Holger, Dipl.-Ing.**
 **44137 Dortmund (DE)**
• **Rechberger, Marcus, Dipl.-Ing.**
 **46562 Voerde (DE)**
• **Bertling, Jürgen, Dipl.-Ing**
 **44139 Dortmund (DE)**

(74) Vertreter: **Pfenning, Meinig & Partner GbR Patent- und Rechtsanwälte Theresienhöhe 13 80339 München (DE)**

(56) Entgegenhaltungen:
**EP-A- 0 160 448**       **WO-A-00/60017**
**US-A- 4 656 062**       **US-A- 5 663 230**
**US-B1- 6 358 580**

• **PATENT ABSTRACTS OF JAPAN Bd. 016, Nr. 485 (C-0993), 8. Oktober 1992 (1992-10-08) & JP 04 178485 A (HAYAKAWA RUBBER CO LTD), 25. Juni 1992 (1992-06-25)**
• **PATENT ABSTRACTS OF JAPAN Bd. 013, Nr. 372 (C-627), 17. August 1989 (1989-08-17) & JP 01 126373 A (FUJIKURA LTD), 18. Mai 1989 (1989-05-18)**
• **WIESNER S ET AL: "EIN THERMOPLASTISCHES ELASTOMER AUS GUMMIMEHL UND POLYPROPYLEN THERMOPLASTIC ELASTOMER FROM RUBBER CRUMB AND POLYPROPYLENE" KAUTSCHUK UND GUMMI - KUNSTSTOFFE, HUTHIG VERLAG, HEIDELBERG, DE, Bd. 56, Nr. 10, Oktober 2003 (2003-10), Seiten 514-518, XP001175099 ISSN: 0948-3276**

**Beschreibung**

Die Erfindung betrifft die Herstellung von in Wasser quellfähigen Thermoplast-Elastomer-Kompositen und ihre Anwendungen im Bereich der Abdichtungstechnik. Die stoffliche Basis der Komposite bilden Gummimehle, thermoplastische Granulate und in Wasser stark quellfähige Materialien, die auf natürlicher Basis, z.B. Polysaccharide, oder synthetischer Basis, z.B. Polyacrylate, ausgewählt werden können.

Wasserquellende Materialzusammensetzungen, die insbesondere in der Dichtungstechnik eingesetzt werden können, sind seit langem beschrieben.

Rein hydrophile Materialien können durch Polymerisation von wassermischbaren (Meth)acrylsäuren und/oder Derivaten dieser Säuren, insbesondere deren Salzen, hergestellt werden (DE 42 26 98). Diese Produkte werden auch als Superabsorbierende Materialien (SAP) bezeichnet. Die Materialien werden im Bereich des Ingenieurbaus eingesetzt. Die flüssige Reaktionsmischung kann in Formen gegossen und dort zu formstabilen Produkten, wie z.B. Profile und Ringe ausreagiert werden oder in flüssiger Form in Hohlräume injiziert werden, wobei die Mischung dann vor Ort zum Endprodukt abreagiert. Die SAP werden auch im Bereich der Kabelindustrie eingesetzt, wo sie bei einem auftretenden Kabelbruch das Eindringen von Feuchtigkeit und deren Ausbreitung in Kabellängsrichtung verhindern. Die SAP werden in diesem Bereich vorwiegend als auf Fasern bzw. Geweben applizierte Polymere verwendet (US 5,298,284 und US 5,163,115).

Darüber hinaus ist der Einsatz von mineralischen hydrophilen Materialien, z.B. Bentoniten, in der Deponietechnik als zusätzlicher Schutzmechanismus vor dem Austritt von Sickerwasser bekannt (AT 127 188).

Aus hydrophilen und hydrophoben Materialien bestehende Produkte werden zumeist als Formteile, z.B. Profile und Ringe gefertigt. Als Basismaterial werden hydrophobe Kautschuke und/oder Elastomere verwendet, die mit quellfähigen Substanzen, wie Stärke-Polyacrylat-Pfropfpolymeren, Polyacrylaten oder Maleinsäureanhydrid-Copolymeren versetzt werden (gemäß der EP 0 118 998, EP 0 055 848, EP 0 410 669, DE 198 00 498). Die Formgebung geschieht mit der konventionellen Methode der Kautschuk/Elastomer-Verarbeitung. Die Edukte werden zunächst gemischt. Die anschließende Formgebung erfolgt entweder über Extrusion oder das Einpressen in Negativformen. In einem abschließenden Schritt werden die Materialien zum Endprodukt vernetzt (Vulkanisation). In der DE 199 156 67 wird ein quellfähiges Abdichtungsgranulat, z.B. SAP/Gummigemisch, beschrieben, das in einen flexiblen Textilschlauch eingekapselt ist und in dieser Form zur Abdichtung von Rohreinführungen genutzt wird.

Die beschriebenen Materialien haben Nachteile. Anorganische Zuschlagstoffe führen bei der Herstellung und Verarbeitung der Dichtungen zu starker Maschinen- und Geräteabnutzung. Die eingesetzten Basischemikalien sind kostenintensiv und enthalten teilweise toxische Bestandteile. Die beschriebenen Herstellungsmethoden erfordern zumeist mehrere Arbeitsschritte, hohe Energiekosten und hohe Sicherheitsanforderungen. Zudem ist die Herstellung feingliedriger Produkte aufgrund der hohen Viskosität der Eduktmischung oftmals schwierig.

Ausgehend hiervon war es Aufgabe der vorliegenden Erfindung, die Nachteile des Standes der Technik zu beseitigen und eine quellfähige Materialzusammensetzung bereitzustellen, die einfach zu verarbeiten ist und deren Grad der Wasseraufnahme durch den Benutzer eingestellt werden kann.

Diese Aufgabe wird durch die quellbare Materialzusammensetzung mit den Merkmalen des Anspruchs 1 gelöst. Weitere vorteilhafte Ausführungsformen sind in den abhängigen Ansprüchen enthalten. In den Ansprüchen 22 bis 27 werden Verwendungen der erfindungsgemäßen Materialzusammensetzung genannt.

Erfindungsgemäß wird eine quellbare Materialzusammensetzung bereitgestellt, die aus einer thermoplastischen Matrix besteht, die mindestens ein elastomeres Material als erste Dispersphase und mindestens ein mit Wasser quellbares Material als mindestens eine weitere Dispersphase enthält. Die erste Dispersphase kann dabei auch aus mehreren elastomeren Materialien bestehen. Gegebenenfalls können weitere Additive enthalten sein.

Vorzugsweise weist die quellbare Materialzusammensetzung ein definiertes Zugangsporensystem auf, worüber das Eindringen von Flüssigkeit in die Materialzusammensetzung ermöglicht wird. Gegenüber den aus dem Stand der Technik bekannten Systemen, die auf einer reinen Diffusion der Flüssigkeiten beruhen, bringt dies deutliche Vorteile bezüglich der Aufnahmefähigkeit der Materialzusammensetzung gegenüber Flüssigkeiten mit sich.

Die erfindungsgemäße Materialzusammensetzung kann gegenüber den bisher beschriebenen Materialien mit konventionellen Methoden der Kunststoffverarbeitung, z.B. Spritztechnik, in einfacher Art und Weise zu Produkten, auch komplexer Geometrie verarbeitet werden. Neben den Quelleigenschaften bieten die erfindungsgemäßen Materialzusammensetzungen auch ein schlagzähes bis elastisches Verhalten. Die Wasseraufnahme der Produkte ist einstellbar und kann beispielsweise nach zweitägiger Lagerung in vollentsalztem Wasser einen Quellungsgrad, d.h. Masse aufgequollenes Produkt bezogen auf die Masse an trockenem Produkt, von vier aufweisen.

Die Basismaterialien sind nicht toxisch und können auch in Form von Recyclatmaterialien, die ein entsprechend niedriges Kostenniveau haben und gleichzeitig in idealer Weise stofflich verwertet werden, eingesetzt werden.

Die Endprodukte sind im Gegensatz zu vernetzten quellfähigen Elastomeren wiederum recyclingfähig.

Das elastomere Material wird dabei vulkanisiert und/oder vernetzt und anschließend zu einem Gummimehl zerkleinert. Es können hierzu grundsätzlich alle Natur- und/oder Synthesekautschuk- und/oder Elastomermaterialien verwendet werden. Besonders bevorzugt sind dabei Ethylen-Propylen-Dien-Kautschuk (EPDM), Styrol-Butadien-Kautschuk (SBR) oder Acrylnitril-Butadien-Kautschuk (NBR). Die Gummimehle können je nach Anforderung der Anwendung bezüglich Elastizität und Quellgrad in Reinform oder in beliebigen Verhältnissen untereinander gemischt eingesetzt werden. Die Gummimehle werden ambient oder unter Tiefkälte beispielsweise mittels Prallmühlen oder Feinschneidmühlen bevorzugt auf Korngrößen < 500 $\mu$m zerkleinert. Besonders bevorzugt kommen Gummimehle mit einer Korngröße < 250 $\mu$m zum Einsatz. Zur Herstellung der Gummimehle eignen sich vor allem vulkanisierte sortenreine Produktionsabfälle, wie sie in der kautschukbearbeitenden Industrie anfallen.

Als thermoplastische Materialien werden vorzugsweise Materialien auf der Basis von Polyethylen, Polypropylen, Polyamid, Polycarbonat, Ethylen-Vinylacetat-Copolymer, Polyurethan oder andere thermoplastische Materialien eingesetzt. In bestimmten Fällen haben sich auch Mischungen als vorteilhaft erwiesen. Wichtig bei der Auswahl der thermoplastischen Matrix ist die Verträglichkeit mit Gummimehl und Superabsorber sowie die typische Verarbeitungstemperatur. Eine thermische Schädigung von Gummimehl und Superabsorber bei der gemeinsamen Verarbeitung mit dem Thermoplast in der Schmelze muss vermieden werden. Die Thermoplasten können, je nach Anforderung der Anwendung (Temperaturbeständigkeit, Viskosität, Zugfestigkeit) in Reinform oder in beliebigen Verhältnissen untereinander vermischt eingesetzt werden. Es kann sowohl Neuware als auch Recyclingmaterial verwendet werden. Die Thermoplaste werden bei der Verarbeitung aufgeschmolzen und können daher in verschiedenen Formulierung, z.B. Chips, Granulate oder Pulver, eingesetzt werden.

Als quellfähige Substanzen eignen sich vorzugsweise natürliche und/oder synthetische Polymere und/oder mineralische Substanzen. Als natürliche Substanzen können bevorzugt Polysaccharide ausgewählt aus Alginaten, Alginsäure, Amylose, Amylopektin, Callose, Carragenan, Cellulose, Chitin, Dextran, Guluronsäure, Inulin, Laminarin, Lichenin, Pullulan, Pustulan, Stärke, Stärkederivaten, Xanthan oder Mischungen derselben eingesetzt werden. Als synthetische Polymere können bevorzugt Materialien aus hochsaugaktivem synthetischem Polymer ausgewählt aus Polymeren auf (Meth)acrylatbasis, Poly(meth)acrylsäure und deren Salzen, Polyacrylamid, Polyalkoholen und Copolymeren der genannten synthetischen Polymeren und weiteren Vernetzungs- und Verarbeitungshilfsmitteln und Eigenschaftsverbesserern eingesetzt werden. Als mineralische Substanzen können z.B. Tone wie Bentonit oder Kaolinit verwendet werden. Die Substanzen werden als Pulver im Korngrößenbereich von 5 bis 1000 $\mu$m bevorzugt eingesetzt. Besonders bevorzugt werden Pulver im Korngrößenbereich von 50 bis 150 $\mu$m verwendet. Zur Herstellung der Pulver eignen sich insbesondere sortenreine Materialien, wie sie z.B. in Form von Produktionsresten im Bereich der Hygieneproduktherstellung (Windeln) anfallen.

Als Hilfsstoffe werden vorzugsweise Füllstoffe und Rieselhilfsmittel, insbesondere Kieselsäure, Silicate und Ruß verwendet. Zur Herstellung von porösen Materialien können vorzugsweise auch poröse Partikel, z.B. Perlite oder zellulare Glaspartikel, oder auch Mikrohohlkugeln in der Materialzusammensetzung enthalten sein. Die Mikrohohlkugeln bestehen dabei vorzugsweise aus Glas, Keramik, Polymer oder liegen als expandierte Polymerkugeln vor.

Weiterhin können Zusätze wie Gleitmittel, Alterungsschutzmittel, Farbstoffe, Treibmittel, Antioxidantien, Haftvermittler, Weichmacher und Vernetzungshilfsmittel Verwendung finden. Weitere Hilfsstoffe können natürliche oder synthetische Fasern sein, z.B. Cellulose-, Bambus- oder Polyamidfasern. Die Fasern sind dabei vorzugsweise ausgewählt aus der Gruppe bestehend aus Kurzfasern, Langfasern, Faserbündeln und Fasergewebe.

Eine weitere Variante sieht vor, dass die Materialzusammensetzung als geschäumtes Material vorliegt, indem beim Herstellungsprozess ein Gas oder Treibmittel zum Aufschäumen des Material verwendet wurde.

Die Menge der einzelnen Komponenten kann, je nach angestrebter Elastizität und Quellvermögen der herzustellenden Werkstoffe variiert werden. Die Stoffe können in den in Tabelle 1 angegebenen Konzentrationen in der Materialmischung vorhanden sein:

**Tabelle 1**

| Inhaltstoffe | Konzentration %(g/g) |
| --- | --- |
| Thermoplastisches Granulat | 5 bis 95 |
| Quellfähiges Granulat | 5 bis 95 |
| Gummimehl | 5 bis 95 |
| Füllstoffe | 5 bis 95 |
| Fasern | 5 bis 95 |
| Weitere Hilfsstoffe | 0,01 bis 10 |

Zur Herstellung der erfindungsgemäßen Materialzusammensetzung wird zunächst eine Mischung mit entsprechender Konzentration der Komponenten angesetzt. Diese Mischung wird mit den für den Prozess des Schmelzmischens üblicherweise verwendeten satzweisen oder kontinuierlich arbeitenden Maschinen, z.B. Innenmischer, Kneter, Zweiwellenextruder oder Planetwalzenextruder, aufgeschmolzen und intensiv vermischt. Das hergestellte Zwischenprodukt kann dann z.B. mit konventionellen Methoden der Thermoplastverarbeitung, wie z.B. durch Extrusion, Kunststoffspritzen, Blasformen, Tiefziehen, Kalandrieren oder Pressen, zu dem gewünschten Formteil verarbeitet werden.

Die erfindungsgemäßen Materialzusammensetzungen weisen elastische Eigenschaften auf und quellen nach Einlagerung in Wasser isotrop auf ein Vielfaches ihres Trockengewichts. Ein gezieltes anisotropisches Aufquellen kann z.B. durch den Einsatz von Fasermaterialien erreicht werden. Durch den einfachen Formgebungsprozess und die Verwendung von Recyclatmaterialien sind die Produkte kostengünstig in großen Mengen herstellbar.

Die neuen Werkstoffe sind aufgrund der thermoplastischen Matrix wiederum recyclingfähig. Sie eignen sich so insbesondere für bautechnische Anwendungen. Auch der Einsatz in Form von Dichtungsfolien oder Dichtungsbahnen ist möglich. Die Materialien können überall dort Einsatz finden, wo eine sichere Abschottung gegenüber wässrigen Flüssigkeiten gewährleistet sein muss. Die Materialien sind in der Lage, sich durch den Aufquellungsprozess und die einhergehende Volumenvergrößerung im Falle von Havarien selbst zu heilen.

Nur beispielhaft seien hier einige Anwendungen der Materialzusammensetzung genannt. Eine betrifft die Abdichtung von Bauwerken im Hoch-, Tief-, Straßen- und Tunnelbau. Diese können hier insbesondere in Form einer Materialfolie oder Materialbahn eingesetzt werden. Eine weitere Verwendung sieht die Abdichtung von Rohren, Rohrverbindungen und Rohreinführungen vor. Hierfür ist es möglich, die Materialzusammensetzung in Form einer Rundschnur, eines Rings, eines Profils oder eines speziell auf das abzudichtende Teil maßgeschneiderten Dichtungskörpers vorzusehen. Weiterhin können die erfindungsgemäßen Materialzusammensetzungen auch zur Herstellung von auf Feuchtigkeit reagierenden Sensoren oder Schaltern eingesetzt werden. Eine andere Anwendungsmöglichkeit der Materialzusammensetzung betrifft die Herstellung selbst reparierender Wandsysteme für luftgefüllte Schwimmgeräte, wie z.B. Schlauchboote oder Schwimmflügel.

Anhand der nachfolgenden Beispiele soll der erfindungsgemäße Gegenstand näher erläutert werden, ohne diesen auf die in den Beispielen genannten Ausführungsformen zu beschränken.

Bei den nachfolgend aufgeführten Ausführungsbeispielen wurde die Quellungseignung der Prüfkörper durch Einlagerung in vollentsalztes Wasser (VE-Wasser) und in 0,9%(g/g) konzentrierte Natriumchlorid-Lösung (NaCl-Lsg.) überprüft. Es wurde jeweils die zeitliche Änderung der relativen Volumenzunahme bestimmt. Die relative Volumenzunahme ist definiert als:

$$\text{Rel. Volumenzunahme} = \frac{\text{Volumen (gequollen)} - \text{Volumen (trocken)}}{\text{Volumen (trocken)}} \cdot 100 \text{ in \%}$$

**Beispiel 1**

In einem Innenmischer wird eine Mischung bestehend aus:

19,49 % (g/g) Polypropylen (Granulat)
31,18 % (g/g) Gummimehl (NR, < 250 $\mu$m)
46,77 % (g/g) Natriumpolyacrylat (mittlere Korngröße 75 $\mu$m)
1,95 % (g/g) Additiv (Bindemittel, pulverförmig)
0,62 % (g/g) Aerosil (pulverförmig)

aufgeschmolzen und homogen vermischt. Anschließend wird die Mischung über einen Extruder ausgetragen und granuliert.

Aus dem mittels Spritzguss angefertigten Zugstab wurde im Stegbereich ein Probenkörper (LxBxH = 15x10x4 mm) ausgeschnitten. Das Material wies eine Dichte von 1,27 g/cm$^3$ auf. Nach 24, 48 und 72 Stunden Einlagerung in den Testflüssigkeiten wurden folgende Volumenzunahmen erreicht (Tabelle 2).

**Tabelle 2**

| Lagerzeit (Stunden) | Relative Volumenzunahme % | Relative Volumenzunahme % |
|---|---|---|
|  | Vollentsalztes Wasser | NaCl-Lösung 0,9% (g/g) |
| 24 | 228 | 139 |
| 48 | 387 | 221 |

(fortgesetzt)

| Lagerzeit (Stunden) | Relative Volumenzunahme % | Relative Volumenzunahme % |
|---|---|---|
| | Vollentsalztes Wasser | NaCl-Lösung 0,9% (g/g) |
| 72 | 411 | 259 |

In einem Innenmischer wird eine Mischung bestehend aus:

|  |  |
|---|---|
| 19,49%(g/g) | Polyethylen(Granulat), |
| 31,18%(g/g) | Gummimehl (NR, < 250 $\mu$m) |
| 46,77%(g/g) | Natriumpolyacrylat (mittlere Korngröße 75 $\mu$m) |
| 1,95%(g/g) | Additiv (Bindemittel, pulverförmig) |
| 0,62%(g/g) | Aerosil (pulverförmig) |

homogen vermischt. Anschließend wird die Mischung über einen Extruder ausgetragen und granuliert.

Aus dem mittels Spritzguss angefertigten Zugstab wurde im Stegbereich ein Probenkörper (LxBxH = 15x10x4 mm) ausgeschnitten. Das Material wies eine Dichte von 1,23 g/cm$^3$ auf. Nach 24, 48 und 72 Stunden Einlagerung in den Testflüssigkeiten wurden folgende Volumenzunahmen erreicht (Tabelle 3).

**Tabelle 3**

| Lagerzeit (Stunden) | Relative Volumenzunahme % | Relative Volumenzunahme % |
|---|---|---|
| | Vollentsalztes Wasser | NaCl-Lösung 0,9% (g/g) |
| 24 | 161 | 121 |
| 48 | 229 | 173 |
| 72 | 256 | 182 |

**Beispiel 3**

In einem Innenmischer wird eine Mischung bestehend aus:

|  |  |
|---|---|
| 29,25%(g/g) | Polypropylen (Granulat) |
| 27,30% (g/g) | Gummimehl (NR, < 250 $\mu$m) |
| 40,95%(g/g) | Natriumpolyacrylat (mittlere Korngröße 75 $\mu$m) |
| 1,95%(g/g) | Additiv (Bindemittel, pulverförmig) |
| 0,55%(g/g) | Aerosil (pulverförmig) |

homogen vermischt. Anschließend wird die Mischung über einen Extruder ausgetragen und granuliert.

Aus dem mittels Spritzguss angefertigten Zugstab wurde im Stegbereich ein Probenkörper (LxBxH = 15x10x4 mm) ausgeschnitten. Das Material wies eine Dichte von 1,30 g/cm$^3$ auf. Nach 24, 48 und 72 Stunden Einlagerung in den Testflüssigkeiten wurden folgende Volumenzunahmen erreicht (Tabelle 4).

**Tabelle 4**

| Lagerzeit (Stunden) | Relative Volumenzunahme % | Relative Volumenzunahme % |
|---|---|---|
| | Vollentsalztes Wasser | NaCl-Lösung 0,9% (g/g) |
| 24 | 350 | 230 |
| 48 | 440 | 282 |
| 72 | 465 | 286 |

**EP 1 616 906 B1**

**Patentansprüche**

1. Quellbare Materialzusammensetzung aus einer thermoplastischen Matrix, die mindestens ein elastomeres Material als erste Dispersphase, wobei das elastomere Material vulkanisiert und/oder vernetzt und anschließend zu einem Gummimehl zerkleinert wird und mindestens ein mit Wasser quellbares Material als weitere Dispersphase enthält.

2. Materialzusammensetzung nach Anspruch 1,
   **dadurch gekennzeichnet, dass** die Materialzusammensetzung ein definiertes Zugangsporensystem aufweist.

3. Materialzusammensetzung nach einem der vorhergehenden Ansprüche,
   **dadurch gekennzeichnet, dass** das Gummimehl eine Korngröße kleiner 500 $\mu$m, insbesondere kleiner 250 $\mu$m, aufweist.

4. Materialzusammensetzung nach einem der vorhergehenden Ansprüche,
   **dadurch gekennzeichnet, dass** der Gummimehl synthetischer oder natürlicher Herkunft ist.

5. Materialzusammensetzung nach einem der vorhergehenden Ansprüche,
   **dadurch gekennzeichnet, dass** das Gummimehl ausgewählt ist aus der Gruppe Ethylenpropylendien-Kautschuk (EPDM), Styrolbutadien-Kautschuk (SBR) und Acrylnitrilbutadien-Kautschuk (NBR).

6. Materialzusammensetzung nach einem der vorhergehenden Ansprüche,
   **dadurch gekennzeichnet, dass** das Gummimehl vulkanisierte, sortenreine Kautschukabfälle enthält.

7. Materialzusammensetzung nach einem der vorhergehenden Ansprüche,
   **dadurch gekennzeichnet, dass** als thermoplastisches Material Polyethylen, Polypropylen, Polyamid, Polycarbonat oder ein Ethylenvinylacetat-Copolymer enthalten ist.

8. Materialzusammensetzung nach einem der vorhergehenden Ansprüche,
   **dadurch gekennzeichnet, dass** die quellbaren Materialien ausgewählt sind aus der Gruppe der natürlichen und synthetischen Polymere und mineralischen Verbindungen.

9. Materialzusammensetzung nach dem vorhergehenden Anspruch,
   **dadurch gekennzeichnet, dass** die natürlichen Polymere ausgewählt sind aus der Gruppe Alginsäure und deren Alginate, Amylose, Amylopektin, Callose, Carragenan, Cellulose, Chitin, Dextran, Guluronsäure, Inulin, Laminarin, Lichenin, Pullulan, Stärke und deren Derivaten, Xanthan oder deren Mischungen.

10. Materialzusammensetzung nach Anspruch 8 oder 9,
    **dadurch gekennzeichnet, dass** die synthetischen Polymere ausgewählt sind aus der Gruppe der Polymere der (Meth)acrylate, Poly(meth)acrylsäuren und deren Salzen, Polyacrylamide, Polyalkohole und deren Copolymeren.

11. Materialzusammensetzung nach einem der Ansprüche 8 bis 10,
    **dadurch gekennzeichnet, dass** die mineralischen Substanzen aus Tonen, insbesondere Bentonit und Kaolinit, bestehen.

12. Materialzusammensetzung nach einem der vorhergehenden Ansprüche,
    **dadurch gekennzeichnet, dass** die quellbaren Materialien in einer Korngröße von 5 bis 1000 $\mu$m, insbesondere von 50 bis 150 $\mu$m enthalten sind.

13. Materialzusammensetzung nach einem der vorhergehenden Ansprüche,
    **dadurch gekennzeichnet, dass** zusätzliche Additive enthalten sind.

14. Materialzusammensetzung nach dem vorhergehenden Anspruch,
    **dadurch gekennzeichnet, dass** die Additive ausgewählt sind aus der Gruppe Füllstoffe, Rieselhilfsmittel, Gleitmittel, Alterungsschutzmittel, Farbstoffe, Treibmittel, Antioxidantien, Haftvermittler, Weichmacher, Vernetzungshilfsmittel, Fasern und Vliese.

15. Materialzusammensetzung nach dem vorhergehenden Anspruch,
    **dadurch gekennzeichnet, dass** als Füllstoff und Rieselhilfsmittel Kieselsäure, Silicate und/oder Ruß enthalten ist.

**16.** Materialzusammensetzung nach Anspruch 14 oder 15, **dadurch gekennzeichnet, dass** poröse Partikel, insbesondere Perlite oder zellulare Glaspartikel, oder Mikrohohlkugeln aus Glas, Keramik, Polymer und/oder expandierbare Polymerkugeln enthalten sind.

**17.** Materialzusammensetzung nach Anspruch 14 bis 16, **dadurch gekennzeichnet, dass** als Fasern synthetische oder natürliche Fasern, insbesondere Cellulose-, Bambus- und/oder Polyamidfasern enthalten sind.

**18.** Materialzusammensetzung nach einem der vorhergehenden Ansprüche, **dadurch gekennzeichnet, dass** die Fasern ausgewählt sind aus der Gruppe bestehend aus Kurzfasern, Langfasern, Faserbündel und Fasergewebe.

**19.** Materialzusammensetzung nach einem der vorhergehenden Ansprüche, **dadurch gekennzeichnet, dass** diese durch ein Gas oder Treibmittel aufgeschäumt ist.

**20.** Materialzusammensetzung nach einem der vorhergehenden Ansprüche, **dadurch gekennzeichnet, dass** die Materialzusammensetzung 5 bis 95 %(g/g) thermoplastisches Material, 5 bis 95 %(g/g) Kautschuk und/oder Elastomer, 5 bis 95 %(g/g) eines mit Wasser quellbaren Materials, 5 bis 95 %(g/g) Füllstoffe, 5 bis 95 %(g/g) Fasern und 0,01 bis 10 %(g/g) weiterer Additive enthält.

**21.** Materialzusammensetzung nach einem der vorhergehenden Ansprüche, **dadurch gekennzeichnet, dass** die Materialzusammensetzung recyclingfähig ist.

**22.** Verwendung der Materialzusammensetzung nach einem der Ansprüche 1 bis 21 zur Abdichtung von Bauwerken im Hoch-, Tief-, Straßen- und Tunnelbau.

**23.** Verwendung der Materialzusammensetzung nach einem der Ansprüche 1 bis 21 zur Herstellung selbstreparierender Wandsysteme für Schwimmgeräte.

**24.** Verwendung nach Anspruch 22 oder 23 in Form einer Materialfolie, Materialbahn oder Beschichtung.

**25.** Verwendung der Materialzusammensetzung nach einem der Ansprüche 1 bis 21 zur Abdichtung von Rohren, Rohrverbindungen und Rohreinführungen.

**26.** Verwendung nach Anspruch 25 in Form einer Rundschnur, eines Rings, eines Profils oder eines speziell auf das abzudichtende Teil maßgeschneiderten Dichtungskörpers.

**27.** Verwendung der Materialzusammensetzung nach einem der Ansprüche 1 bis 21 zur Herstellung von Sensoren oder Schaltern, die auf Feuchtigkeit reagieren.

**Claims**

**1.** Swellable material composition consisting of a thermoplastic matrix, comprising at least one elastomer material as a first dispersion phase, whereby the elastomer material is vulcanised and/or cross-linked, and subsequently shredded to form a rubber powder, and at least one material swellable with water as a further dispersion phase.

**2.** Material composition according to Claim 1, **characterised in that** the material composition comprises a defined access pore system.

**3.** Material composition according to one of the preceding Claims, **characterised in that** the rubber powder has a grain size of less than 500 $\mu$m, in particular less than 250 $\mu$m.

**4.** Material composition according to one of the preceding Claims, **characterised in that** the rubber powder is of synthetic or natural origin.

**5.** Material composition according to one of the preceding Claims, **characterised in that** the rubber powder is selected from the group consisting of ethylene propylene diene rubber (EPDM), styrol butadiene rubber (SBR) and acryl nitrile butadiene rubber (NBR).

6. Material composition according to one of the preceding Claims, **characterised in that** the rubber powder comprises vulcanised, pure rubber waste products.

7. Material composition according to one of the preceding Claims, **characterised in that** polyethylene, polypropylene, polyamide, polycarbonate, or an ethylene vinyl acetate copolymer is provided as the thermoplastic material.

8. Material composition according to one of the preceding Claims, **characterised in that** the swellable materials are selected from the group consisting of natural and synthetic polymers and mineral compounds.

9. Material composition according to one of the preceding Claims, **characterised in that** the natural polymers are selected from the group consisting of alginic acid and its alginates, amylose, amylopectin, callose, carragenan, cellulose, chitin, dextran, guluronic acid, inulin, laminarin, lichenin, pullulan, starch and its derivatives, xanthan, or mixtures of the same.

10. Material composition according to Claim 8 or 9, **characterised in that** the synthetic polymers are selected from the group of the polymers of (meth)acrylate, poly(meth)acrylic acids and their salts, polyacrylamide, polyalcohols, and their copolymers.

11. Material composition according to one of the Claims 8 to 10, **characterised in that** the mineral substances consist of clays, in particular bentonite and kaolinite.

12. Material composition according to one of the preceding Claims, **characterised in that** the swellable materials are provided in a grain size of 5 to 1000 $\mu$m, in particular of 50 to 150 $\mu$m.

13. Material composition according to one of the preceding Claims, **characterised in that** additional additives are incorporated.

14. Material composition according to the preceding Claim, **characterised in that** the additives are selected from the group of fillers, flow enhancing agents, slide enhancing agents, anti-ageing agents, colourants, propellants, anti-oxidants, adhesion enhancers, softeners, cross-linking agents, fibres and fleeces.

15. Material composition according to the preceding Claim, **characterised in that** silicic acid, silicate and/or soot is incorporated as a filler and flow enhancing agent.

16. Material composition according to Claim 14 or 15, **characterised in that** porous particles, in particular perlite or cellular gas particles, or hollow microspheres made of glass, ceramic, polymer and/or expandable polymer spheres are incorporated.

17. Material composition according to Claims 14 to 16, **characterised in that** synthetic or natural fibres, in particular cellulose, bamboo and/or polyamide fibres are incorporated as fibres.

18. Material composition according to one of the preceding Claims, **characterised in that** the fibres are selected from the group consisting of short fibres, long fibres, fibre bundles and fibre mesh.

19. Material composition according to one of the preceding Claims, **characterised in that** the same is foamed by means of a gas or a propellant.

20. Material composition according to one of the preceding Claims, **characterised in that** the material composition contains 5 to 95% (g/g) thermoplastic material, 5 to 95% (g/g) rubber and/or elastomer, 5 to 95% (g/g) of a material swellable with water, 5 to 95% (g/g) filler, 5 to 95% (g/g) fibre, and 0.01 to 10% (g/g) additional additives.

21. Material composition according to one of the preceding Claims, **characterised in that** the material composition is recyclable.

22. Use of the material composition according to one of the Claims 1 to 21 for sealing buildings during civil engineering, road and tunnel construction.

23. Use of the material composition according to one of the Claims 1 to 21 for constructing self-repairing wall systems for floatation aids.

24. Use according to Claim 22 or 23 in the form of a material foil, a material strip, or a coating.

25. Use of the material composition according to one of the Claims 1 to 21 for sealing pipes, pipe connections, and pipe inserts.

26. Use according to Claim 25 in the form of a circular rope, a ring, a profile, or a sealing body specially designed for the component to be sealed.

27. Use of the material composition according to one of the Claims 1 to 21 for producing sensors or switches that react to moisture.


**Revendications**

1. Composition de matériaux pouvant gonfler, composée d'une matrice thermoplastique, qui contient au moins un matériau élastomère comme première phase dispersée, le matériau élastomère étant vulcanisé et/ou réticulé puis étant réduit en une poudre de caoutchouc, et au moins un matériau pouvant gonfler avec de l'eau comme phase dispersée supplémentaire.

2. Composition de matériaux selon la revendication 1,
**caractérisée en ce que** la composition de matériaux présente un système d'accès poreux défini.

3. Composition de matériaux selon l'une quelconque des revendications précédentes,
**caractérisée en ce que** la poudre de caoutchouc présente une grosseur de grain inférieure à 500 $\mu$m, en particulier inférieure à 250 $\mu$m.

4. Composition de matériaux selon l'une quelconque des revendications précédentes,
**caractérisée en ce que** la poudre de caoutchouc est d'origine synthétique ou naturelle.

5. Composition de matériaux selon l'une quelconque des revendications précédentes,
**caractérisée en ce que** la poudre de caoutchouc est choisie parmi le groupe constitué de caoutchouc éthylène-propylène-diène (EPDM), de caoutchouc butadiène styrène (SBR) et de caoutchouc acrylonitrile-butadiène (NBR).

6. Composition de matériaux selon l'une quelconque des revendications précédentes,
**caractérisée en ce que** la poudre de caoutchouc contient des résidus de caoutchouc à l'état pur et vulcanisés.

7. Composition de matériaux selon l'une quelconque des revendications précédentes,
**caractérisée en ce que** du polyéthylène, du polypropylène, du polyamide, du polycarbonate ou un copolymère éthylène acétate de vinyle est présent comme matériau thermoplastique.

8. Composition de matériaux selon l'une quelconque des revendications précédentes,
**caractérisée en ce que** les matériaux pouvant gonfler sont choisis parmi le groupe constitué de polymères naturels et synthétiques et de composés minéraux.

9. Composition de matériaux selon la revendication précédente,
**caractérisée en ce que** les polymères naturels sont choisis parmi le groupe constitué d'acide alginique et ses alginates, d'amylose, d'amylopectine, de callose, de carraghénane, de cellulose, de chitine, de dextrane, d'acide guluronique, d'inuline, de laminarine, de lichénine, de pullulane, d'amidon et de ses dérivés, de xanthane ou de ses mélanges.

10. Composition de matériaux selon les revendications 8 ou 9,
**caractérisée en ce que** les polymères synthétiques sont choisis parmi le groupe constitués des polymères de (méth)acrylate, des acides poly(méth)acryliques et de leurs sels, des polyacrylamides, des polyols et de leurs copolymères.

11. Composition de matériaux selon l'une quelconque des revendications 8 à 10,

**caractérisée en ce que** les substances minérales se composent d'argiles, en particulier de bentonite et de kaolinite.

12. Composition de matériaux selon l'une quelconque des revendications précédentes,
    **caractérisée en ce que** les matériaux pouvant gonfler sont présents dans une grosseur de grain allant de 5 à 1000 μm, en particulier de 50 à 150 μm.

13. Composition de matériaux selon l'une quelconque des revendications précédentes,
    **caractérisée en ce que** des additifs supplémentaires sont présents.

14. Composition de matériaux selon la revendication précédente,
    **caractérisée en ce que** les additifs sont choisis parmi le groupe constitué de matières de charge, d'agents auxiliaires d'écoulement, d'agents lubrifiants, d'agents protecteurs contre le vieillissement, de matières colorantes, de propulseurs, d'antioxydants, d'agents adhésifs, de plastifiants, d'agents auxiliaires de réticulation, de fibres et de non-tissés.

15. Composition de matériaux selon la revendication précédente,
    **caractérisée en ce que** de l'acide silique, du silicate et/ou de la suie sont présents comme matière de charge et agent auxiliaire d'écoulement.

16. Composition de matériaux selon la revendication 14 ou 15,
    **caractérisée en ce que** des particules poreuses, en particulier de la perlite ou des particules de verre cellulaires, ou des microbilles creuses en verre, en céramique, en polymère et/ou des billes de polymère expansibles sont présentes.

17. Composition de matériaux selon les revendications 14 à 16,
    **caractérisée en ce que** des fibres synthétiques ou naturelles, en particulier des fibres de cellulose, de bambou et/ou de polyamide sont présentes comme fibres.

18. Composition de matériaux selon l'une quelconque des revendications précédentes,
    **caractérisée en ce que** les fibres sont choisies parmi le groupe constitué de fibres courtes, de fibres longues, de faisceaux de fibres et de tissus en fibres.

19. Composition de matériaux selon l'une quelconque des revendications précédentes,
    **caractérisée en ce que** celle-ci mousse grâce à un gaz ou à un propulseur.

20. Composition de matériaux selon l'une quelconque des revendications précédentes,
    **caractérisée en ce que** la composition de matériaux contient de 5 à 95 % (g/g) d'un matériau thermoplastique, de 5 à 95 % (g/g) de caoutchouc et/ou d'élastomère, de 5 à 95 % (g/g) d'un matériau pouvant gonfler avec de l'eau, de 5 à 95 % (g/g) de fibres et de 0,01 à 10 % (g/g) d'additifs supplémentaires.

21. Composition de matériaux selon l'une quelconque des revendications précédentes,
    **caractérisée en ce que** la composition de matériaux peut être recyclée.

22. Utilisation de la composition de matériaux selon l'une quelconque des revendications 1 à 21 pour étanchéifier des ouvrages dans la construction de bâtiments, dans des travaux souterrains, dans la construction routière, et dans la construction de tunnels.

23. Utilisation de la composition de matériaux selon l'une quelconque des revendications 1 à 21 pour fabriquer des systèmes de parois auto-réparateurs pour des dispositifs flottants.

24. Utilisation selon la revendication 22 ou 23 sous la forme d'une feuille de matériau, d'une bande de matériau ou d'un revêtement.

25. Utilisation de la composition de matériaux selon l'une quelconque des revendications 1 à 21 pour étanchéifier des tuyaux, des raccords de tuyauterie et des entrées de tuyaux.

26. Utilisation selon la revendication 25 sous la forme d'un cordon, d'un anneau, d'un profilé ou d'un corps d'étanchéification spécialement coupé sur mesure sur la pièce à étanchéifier.

**27.** Utilisation de la composition de matériaux selon l'une quelconque des revendications 1 à 21 pour fabriquer des capteurs ou des contacteurs, réagissant à l'humidité.